# EUROPÄISCHE PATENTSCHRIFT

(11) **EP 3 163 258 B1**
(45) Veröffentlichungstag und Bekanntmachung des Hinweises auf die Patenterteilung: **17.10.2018**
(21) Anmeldenummer: 16196209.7
(22) Anmeldetag: 28.10.2016
(51) Int. Cl.: G01D 5/14, G01D 11/24, G01D 11/30

(54) **SENSOREINHEIT**
SENSOR UNIT
DISPOSITIF DÉTECTEUR

(30) Priorität: 29.10.2015 DE 102015118532
(43) Veröffentlichungstag der Anmeldung: 03.05.2017
(73) Patentinhaber: Siko GmbH, 79256 Buchenbach (DE)
(72) Erfinder: MÜLLER, Christian, 8004 Zürich (CH); CANCAREVIC, Igor, 8910 Affoltern am Albis (CH)
(74) Vertreter: Patentanwälte und Rechtsanwalt Weiß, Arat & Partner mbB

(56) Entgegenhaltungen:
- EP-A1- 2 664 900
- EP-A2- 2 472 235
- DE-U1-202007 011 837
- Allen-Bradley Allen-Bradley: "Cordsets & Field Attachables Technical Data", , 31. Dezember 2014 (2014-12-31), XP055355351, Gefunden im Internet: URL:http://literature.rockwellautomation.c om/idc/groups/literature/documents/td/889- td002_-en-p.pdf [gefunden am 2017-03-15]

## Beschreibung

Die vorliegende Erfindung betrifft eine Sensoreinheit gemäss dem Oberbegriff des Anspruchs 1.

### STAND DER TECHNIK

Aus dem Stand der Technik wird auf die EP 2 472 235 A2 hingewiesen. Dort ist ein Sensorgehäuse und dessen Herstellung offenbart, wobei in dem Sensorgehäuse verschiedene technische Eigenschaften zusammengefasst werden können.
Weiter wird auf die DE 20 2007 011 837 U1 hingewiesen, welche eine SensorEinheit offenbart, wobei eine um eine Längsachse detektierender Winkelsensor mit einem magnetisch empfindlichen Stirnflächenbereich, der nach dem Hall-Prinzip oder dem magnetoresistiven Prinzip arbeitet, wobei ein Sensorelement in der Nähe der Stirnfläche angeordnet ist.
Daneben wird auf die EP 2 664 900 A1 hingewiesen, welche ein metallisches Sensorgehäuse und ein Verfahren zur Herstellung dessen offenbart, wobei in dem Sensorgehäuse ein optoelektronischer Sensor angeordnet ist. Ausserdem wird auf Allen-Bradley: "Cordsets & Field Attachables Technical Data" vom 31.12. 2014 (XP055355351) verwiesen, welche ebenfalls eine Sensoreinheit offenbart.

Aus dem Stand der Technik sind zahlreiche Sensoreinheiten bekannt. Diese weisen ein metallisches Gehäuse auf und sind durch ihre Dimensionierung und Ausformung zumeist aufwendig zu installieren. Darüber hinaus ist die Herstellung aufgrund von Lötarbeiten in Verbindung mit Leiterplatten und entsprechenden Anschlüssen sehr aufwendig und teuer. Weiterhin sind die bekannten Systeme für Status- und Funktionsberichte der Sensoreinheit entweder nicht vorgesehen oder technisch sehr aufwendig. Bei den bekannten Sensoreinheiten ist lediglich ein Möglichkeit der Installierung in und an einer Maschine vorgesehen, zumeist über Schrauben, dies macht den Einsatz unflexibel. Bisherige Sensoreinheiten mit Steckerlösungen benötigen in der Breite und/oder in der Länge einen größeren Einbauraum. Bei Sensoreinheiten mit geringerem Format ist die Datenübertragung aufgrund weniger geeigneter Anschlüsse vermindert.

### OFFENBARUNG DER ERFINDUNG

### AUFGABE

Die Aufgabe der vorliegenden Erfindung ist es, die Nachteile des Standes der Technik zu überwinden. Insbesondere soll eine Vorrichtung bereitgestellt werden, die kompakt, kostengünstig und in Bezug auf die Anwendung einfach und flexibel zu handhaben ist.

### LÖSUNG DER AUFGABE

Zur Lösung der Aufgabe führen die Merkmale des Anspruchs 1.

Die erfindungsgemässe Sensoreinheit weist sich durch ein besonders vorteilhaftes Sensorgehäuse aus. Dieses ist, entgegen der bisher üblichen Sensoreinheiten, vollständig und inklusive der Steckerbuchse aus gespritzten Kunststoff hergestellt. Dies ist günstiger, leichter und vorteilhaft in Bezug auf die Messgenauigkeit des Magnetsensors, da dieser durch metallische Sensorgehäuse beeinflusst werden kann.

Die Sensoreinheit ist besonders kompakt ausgeführt, was ermöglicht, dass ein Einbau auch an bisher nicht zu realisierenden Positionen einer Maschine möglich ist. Die maximale Breite der Sensoreinheit beträgt 10 mm.

Die erfindungsgemässe Sensoreinheit verfügt über eine neuartige Steckerbuchse, die für die geringe Breite des Sensorgehäuses von maximal 10 mm entwickelt wurde. Bisherig bekannte Steckverbinder, die eine Breite von 10 mm ausweisen, verfügen lediglich über vier Pole, beispielsweise M5 Steckverbindungen. Es gibt zwar Steckverbindungen die mehr als vier Pole aufweisen, wie beispielsweise M8 Steckverbindungen, diese sind jedoch deutlich breiter als 10 mm und damit breiter als die Sensoreinheit.

Besonders an der erfindungsgemässen Steckerbuchse ist, dass sie eine Lösung für den vorliegenden Größenverhältnisse liefert und zwar eine Steckverbindung mit bis zu acht Polen und einem maximalen Durchmesser von 10 mm.

Ein weiterer wesentlicher Vorteil der erfindungsgemässen Sensoreinheit ist, dass die Steckerbuchse elektromagnetisch abgeschirmt ist, wodurch die Funktionssicherheit des Magnetsensors erhöht wird. Die erforderlichen EMV-Anforderungen werden dadurch vollumfänglich eingehalten. Ohne eine entsprechend wirksame Abschirmung der Steckerbuchse würde der Vorteil des aus Kunststoff gespritzten Sensorgehäuses in Teilen relativiert.

Weiterhin weist die Steckerbuchse eine halbkreisförmige Orientierungswulst an der Innenseite auf. Diese ermöglicht in Verbindung mit einer entsprechenden Aussparung des Steckers, dass keine fehlerhafte Steckverbindung vorgenommen werden kann.

Ferner weist die Steckerbuchse ein Gewinde auf, über welches es mit einem entsprechenden Stecker eines Kabels verschraubt wird. Der Stecker des Kabels weist dazu einen passenden Gewindering auf. Eine optische Kennzeichnung in Form eines O-Ringes mit unterschiedlichen Farben dient zur Unterscheidung der verschiedenen Varianten der Sensoreinheit.

Üblicherweise werden die Kontakte der Steckerbuchse über Kabel oder Litzen mit einer entsprechenden Leiterplatte verlötet. Dies kann, zwar nicht in allen, aber in einigen Fällen von Nachteil sein. Daher kann die Sensoreinheit in einigen Ausführungsbeispielen über einen flexiblen Leiterplattenverbinder verfügen, der einends mit der Steckerbuchse und andernends über einen Steckanschluss mit der Leiterplatte verbunden ist. Dies vereinfacht und beschleunigt die Herstellung in diesen Fällen enorm. In einigen Situationen kann es jedoch weiterhin vorteilhaft sein, dass an Stelle des Leiterplattenverbinders allgemein übliche Litzen auf herkömmliche Weise verlötet werden. Die Möglichkeit beide Systeme zu verwenden bietet maximale Flexibilität in Bezug auf die individuell vorzufindende Situation.

An die Leiterplatte ist auch der entsprechende Magnetsensor angeschlossen. Dabei ist neben einem vorzugweise zu verwendenden Hall-Sensor auch der Einbau anderer Magnetsensoren wie beispielsweise TMR, AMR oder GMR - Sensoren möglich.

Vorteilhafterweise verfügt die Sensoreinheit an der abgeflachten Ecke oberhalb der Steckerbuchse über ein oder mehrere Sichtfenster, welche(s) in das Kunststoff-Sensorgehäuse integriert ist. Diese(s) Sichtfenster sind (ist) durchsichtig und geben (gibt) den Blick auf mehrere darunter im Inneren der Sensoreinheit angeordnete und unterschiedlich gefärbte Status-LEDs. Diese sind ebenfalls mit der Leiterplatte verbunden. Eine der Status-LEDs leuchtet bei fehlerfreier Funktion und Datenübertragung der Sensoreinheit. Dadurch ist es durch einen kurzen Blick möglich die Funktion der Sensoreinheit zu überprüfen ohne die Sensoreinheit ausbauen oder anderweitig genauer untersuchen zu müssen. Dadurch wird Zeit gespart und unnötige Arbeit vermieden. In einem bevorzugten Ausführungsbeispiel kann das Sichtfenster als Silikonkappe ausgebildet sein.

Weitere Vorteile der erfindungsgemässen Sensoreinheit ergeben sich aus den vier jeweils um die Ecken des Sensorgehäuses angeordneten Nuten. Diese Nuten ermöglichen, dass der Einbau und die Positionierung in den entsprechenden Maschinen ggf. über Klemm- und Steckverbindungen erfolgen kann. Dies ermöglicht die eine vielseitige schnelle und einfache Positionierung der Sensoreinheit ohne zusätzliches Werkzeug.

Weiterhin vorteilhaft sind die in das Sensorgehäuse integrierten Durchfassungen. Diese sind ebenfalls derart gestaltet und platziert, dass eine Installation und Ausrichtung in und an einer Maschine einfach und multifunktional erfolgen kann.

Der erfindungsgemässe Sensor weist eine Abstandserkennung auf. Diese Abstandserkennung ist geeignet zur Erfassung des Abstands des Sensor zu einem Magnetband. Das Magnetband weist unterschiedliche Magnetfelder auf, welche von dem Sensor erfasst werden. Dabei wird das Magnetband und der Sensor regelmässig auf unterschiedlichen Teilen einer Maschine angebracht, wobei zumindest eines der beiden Teile beweglich ist.

Die Abstandserkennung steht mit einer der Status-LEDs in Wirkverbindung. Das bedeutet, dass bei einem Überschreiten des vorgegebenen Abstands des Sensors zu dem Magnetband eine diesbezüglich definierte Status-LED aktiviert wird und z.B. dauernd leuchtend oder durch gleichbleibenden Takt aufblinkend einen Fehlerzustand anzeigt. Dadurch wird vorteilhaft erreicht, dass der Sensor immer einen geeigneten Abstand zu dem Magnetband aufweist und somit keine fehlerhaften Daten ermittelt werden. Die Funktion hilft dem Einrichter die optimale Positionierung des Sensors festzulegen, ohne dass dabei ein Höchstabstand überschritten wird, ab dem eine Detektion nicht mehr möglich ist oder nur fehlerhaft möglich ist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine schematische Darstellung einer erfindungsgemässen Sensoreinheit aus einem seitlich Blickwinkel auf die Seite S.
Figur 2 eine schematische Darstellung einer erfindungsgemässen Sensoreinheit aus einem Blickwinkel von oben auf die Seite O.
Figur 3 eine schematische Darstellung einer erfindungsgemässen Sensoreinheit aus einem Blickwinkel schräg von unten auf die Seite U und die Seite S.
Figur 4 eine schematische Darstellung einer erfindungsgemässen Sensoreinheit aus einem seitlich Blickwinkel auf die Seite V.
Figur 5 eine schematische Darstellung einer erfindungsgemässen Sensoreinheit mit angeschlossenem Kabel aus einem Blickwinkel schräg von oben.
Figur 6 eine schematische Darstellung einer erfindungsgemässen Sensoreinheit deren Seitenwand S nicht dargestellt ist, so dass das Innere der Sensoreinheit zu sehen ist.
Figur 7 eine schematische Darstellung einer erfindungsgemässen Sensoreinheit deren Seitenwand S nicht dargestellt ist, so dass das Innere der Sensoreinheit zu sehen ist.

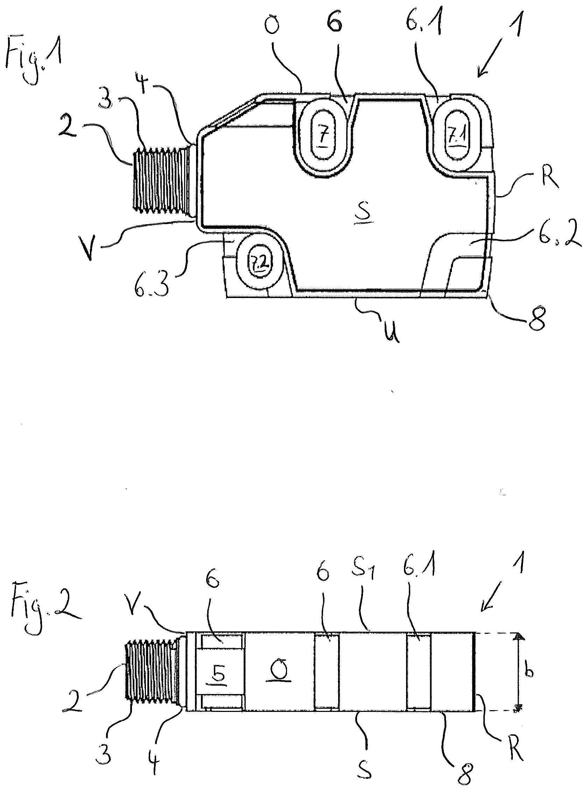

In Figur 1 ist eine erfindungsgemässe Sensoreinheit 1 in einer Seitenansicht auf die Seite S dargestellt. An der Seite V des Sensorgehäuses 8 befindet sich eine Steckerbuchse 2 mit einem Gewinde 3 und einem an der Seite V anliegenden optischen Kennzeichnung 4.

Das Sensorgehäuse 8 weist auf den Seitenwänden S bzw. S1 drei Durchfassungen 7, 7.1 und 7.2 auf. Die Durchfassungen 7 und 7.1 liegen an der Kante zur Oberseite O, wobei die Durchfassung 7.1 an der Kantenecke zwischen der Oberseite O und der Rückseite R liegt. Die Durchfassung 7 liegt mittig an der Kante zur Oberseite O zwischen der Durchfassung 7.1 und der abgeflachten Ecke zwischen der Seite O und der Seite V.

Die Durchfassungen 7 und 7.1 sind gleich gross und weisen eine ovale Ausformung auf, wobei die graden Seiten jeweils senkrecht zur Kante der Oberseite O ausgerichtet sind.

Die Durchfassung 7.2 weist hingegen eine nur leichte ovale Form auf und ist an der Ecke zwischen der Vorderseite V und der Unterseite U angeordnet.

An den jeweiligen Ecken des Sensorgehäuses 8 sind Nuten 6, 6.1, 6.2 und 6.3 angeordnet. Dies Nuten 6, 6.1, verlaufen ringförmig um die jeweiligen Ecken und stehen auf den beiden Seite S und S1 im Kontakt mit den Durchfassungen 7 und 7.1.

Die Nut 6.2 an der Ecke zwischen der Rückseite R und der Unterseite U ist nicht ringförmig durchgängig. Die Nut 6.2 verläuft lediglich über die Seiten S, R und S2. An der Unterseite U ist die Nut 6.2 unterbrochen.

Die Nut 6.3 ist an der Ecke zwischen den Vorderseiten V und der Unterseite U angeordnet. Sie verläuft durch die Durchfassung 7.2, ist jedoch wie die Nut 6.2 nicht durchgängig, da sie ebenfalls an der Unterseite U unterbrochen ist.

Die Unterseite U ist dementsprechend die einzige Seite des Sensorgehäuses 8, die keine Nut aufweist.

In Figur 2 ist die erfindungsgemässe Sensoreinheit 1 in einer Ansicht von oben auf die Oberseite O dargestellt.

Die Breite b des Sensorgehäuses 8 beträgt maximal 10 mm. Die Steckerbuchse 2 ist entsprechend schmaler.

Weiterhin zu sehen sind die Nuten 6 und 6.1, wobei die Nut 6 ebenfalls an der abgeflachte Ecke zwischen den Seiten O und V zu sehen ist. Durch die Schräge der abgeflachten Ecke zwischen den Seiten O und V ist die Nut 6 an dieser Stelle breiter als an der Seite O. An dieser verbreiterten Seite ist in der Nut 6 eine fensterähnliche Sichtfenster 5 angeordnet. Diese Sichtfenster 5 ermöglicht den Blick auf die im Innern des Sensorgehäuses 8 angeordneten unterschiedlich farbigen Status-LEDs 16. Das Sichtfenster 5 ist vollständig in das Sensorgehäuse 8 eingegossen.

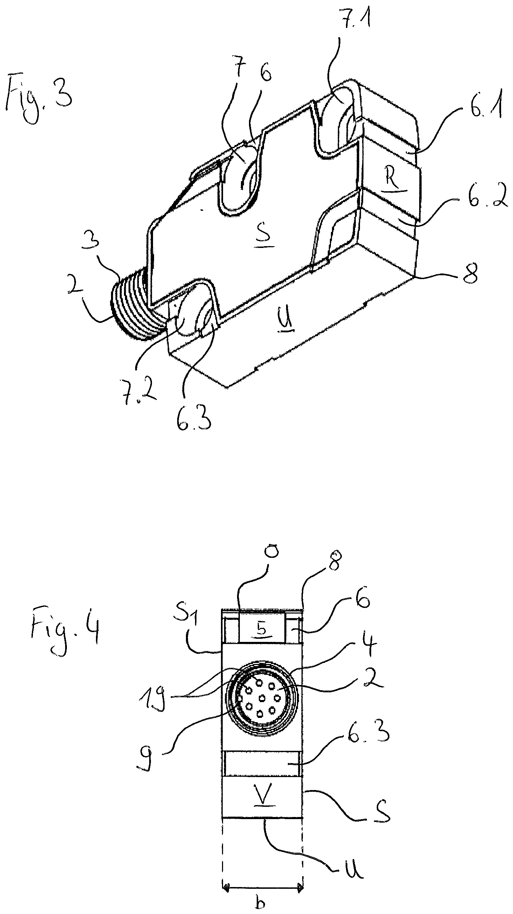

In Figur 3 ist die erfindungsgemässe Sensoreinheit 1 in einer Ansicht schräg von unten auf die Unterseite U dargestellt.
Wie in der Beschreibung zu Figur 2 dargestellt weist die Unterseite U keine Nuten auf. Die Nuten 6.2 und 6.3 enden jeweils an den Seitenwandkanten S und S1 zur Unterseite U.

In Figur 4 ist die erfindungsgemässe Sensoreinheit 1 in einer seitlichen Ansicht auf die Vorderseite V dargestellt. Diese Ansicht erlaubt einen Blick in die Steckerbuchse 2. In der Steckerbuchse 2 sind acht Polestäbe 19 angeordnet. Darüber hinaus ist am inneren Rand der Steckerbuchse 2, auf der Seite der Seitenwand S1 eine Orientierungswulst 9 in Form eines Halbkreises angeordnet. Ebenfalls aus diesem Blickwinkel zu sehen ist die optische Kennzeichnung 4 .

Weiterhin ist das Sichtfenster 5 in der Nut 6 an der abgeflachten Ecke zwischen der Oberseite O und der Vorderseite V zu sehen.

Die Nut 6.3 verläuft zwischen der Steckerbuchse 2 und der Ecke der Vorderseite V und der Unterseite U.

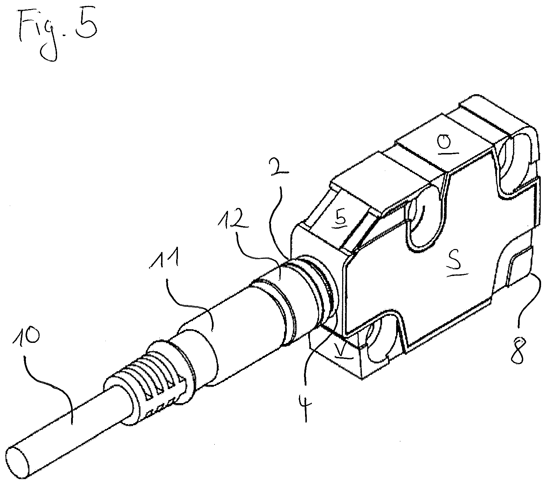

In Figur 5 ist die erfindungsgemässe Sensoreinheit 1 aus einer Sicht schräg von oben dargestellt. Die Sensoreinheit 1 ist über die Steckerbuchse 2 mit einem Kabel 10 verbunden. Das Kabel 10 verfügt über einen zu der achtpoligen Steckerbuchse 2 passenden Kabelstecker 11. Der Kabelstecker 11 ist über einen Gewindering 12 mit dem Gewinde 3 der Steckerbuchse 2 verbunden. Der Gewindering 12 ist bis zur optischen Kennzeichnung 4 auf das Gewinde 3 aufgeschraubt.

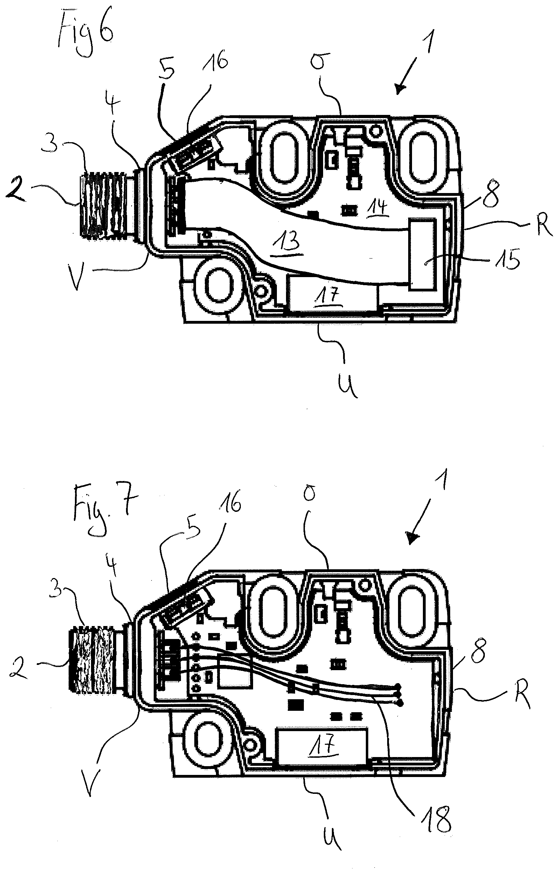

In Figur 6 ist die erfindungsgemässe Sensoreinheit 1 mit geöffnetem Sensorgehäuse 8 dargestellt, weshalb die Seitenwand S nicht abgebildet ist. Die Steckerbuchse 2 mündet auf der Innenseite des Sensorgehäuses 8 in einen flexiblen Leiterplattenverbinder 13, der zu einem Leiterplattenanschluss 15 führt und so zur Leiterplatte 14 eine Verbindung herstellt.
Weiterhin ist die Sichtfenster 5 an der inneren Seite der abgeflachte Ecke zwischen den Oberseite O und der Vorderseite V zu sehen, welche die unterschiedlich gefärbten Status-LEDs abschirmt.
An der Innenseite der Unterseite U des Sensorgehäuses 8 ist ein Sensor 17 angeordnet. Dieser ist mit der Leiterplatte 14 verbunden und ist, entgegen der Darstellung in der Figur 6 nicht von aussen sichtbar und durchgreift die Aussenwand der Unterseite U nicht.

Die Figur 7 unterscheidet sich nur geringfügig von der zuvor beschriebenen Figur 6. Einziger Unterschied ist hier, dass anstatt des Leiterplattenverbinders 13, üblich verlötete Litzen 18 die Leiterplatte 14 mit der Steckerbuchse 2 verbinden. Dabei kann die tatsächliche Anzahl der dargestellten Litzen von der Darstellung im beschrieben Ausführungsbeispiel der Figur 7 abweichen.

**Bezugszeichenliste**

| | | | | | |
|---|---|---|---|---|---|
| 1 | Sensoreinheit | O | Oberseite | 67 | |
| 2 | Steckerbuchse | U | Unterseite | 68 | |
| 3 | Gewinde | R | Rückseite | 69 | |
| 4 | optische Kennzeichnung | S, S1 | Seitenwand | 70 | |
| 5 | Sichtfenster | V | Vorderseite | 71 | |
| 6,6.1, 6.2, 6.3 | Nut | b | Breite | 72 | |
| 7, 7.1, 7.2 | Durchfassung | | | 73 | |
| 8 | Sensorgehäuse | 41 | | 74 | |
| 9 | Orientierungswulst | 42 | | 75 | |
| 10 | Kabel | 43 | | 76 | |
| 11 | Kabelstecker | 44 | | 77 | |
| 12 | Gewindering | 45 | | 78 | |
| 13 | Leiterplattenverbinder | 46 | | 79 | |
| 14 | Leiterplatte | 47 | | | |
| 15 | Anschluss Leiterplatte | 48 | | | |
| 16 | Status-LED(s) | 49 | | | |
| 17 | Sensor | 50 | | | |
| 18 | Litzen | 51 | | | |
| 19 | Polstäbe | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Sensoreinheit (1) mit einem Sensorgehäuse (8), einer Steckerbuchse (2), einer Leiterplatte (14) und einem Sensor (17), wobei das Sensorgehäuse (8) eine Breite (b), Länge (l) sowie eine Höhe (h) aufweist und eine Durchfassung (7, 7.1, 7.2) umfasst und die Steckerbuchse (2) schmaler als die Breite (b) ist, wobei die Steckerbuchse (2) einen Durchmesser von maximal 10 mm aufweist, bis zu acht Polstäbe aufweist (19), ein Gewinde (3) und eine Orientierungswulst (9) hat, und die Steckerbuchse (2) über mehrere Litzen (13) mit einer Leiterplatte (14) verbunden ist und das Sensorgehäuse (8) ein oder mehrere Sichtfenster (5) für mindestens eine von aussen sichtbare Status-LED (16) aufweist, wobei die Status-LED(s) (16) mit der Leiterplatte (14) verbunden und das Sensorgehäuse (8) aus Kunststoff besteht und vollständig vergossen ist und der Sensor (17) vollständig von dem Sensorgehäuse (8) umschlossen ist,
**dadurch gekennzeichnet,**
**dass** es sich bei dem Sensor (17) um einen Hall, TMR, AMR oder GMR - Sensor handelt und die Steckerbuchse (2) im Innenumfang die Orientierungswulst (9) umfasst, wobei zwischen dem Gewinde (3) und einer Vorderseite (V) des Sensorgehäuses (8) eine optische Kennzeichnung (4) vorhanden ist, wobei die optische Kennzeichnung ein O-Ring mit unterschiedlichen Farben ist, und zur Unterscheidung der verschiedenen Varianten der Sensoreinheit dient.

2. Sensoreinheit (1) nach Anspruch 1, **dadurch gekennzeichnet, dass** das Sensorgehäuse (8) Nuten (6, 6.1, 6.2, 6.3) und Durchfassungen (7, 7.1, 7.2) umfasst.

3. Sensoreinheit (1) nach einem der vorherigen Ansprüche, **dadurch gekennzeichnet, dass** die Status-LED (16) von einer oder mehreren transparenten Kappe(n) umfasst wird.

4. Sensoreinheit (1) nach einem der vorherigen Ansprüche, **dadurch gekennzeichnet, dass** der Sensor (17) eine Abstandserkennung aufweist, geeignet zur Erfassung des Abstands des Sensor (17) zu einem Magnetband.

5. Sensoreinheit (1) nach Anspruch 4, **dadurch gekennzeichnet, dass** die Abstandserkennung mit einer Status-LED (16) in Wirkverbindung steht.

6. Sensoreinheit (1) nach einem der vorigen Ansprüche, **dadurch gekennzeichnet, dass** ein Kabel (10) mit einem Kabelstecker (11) und einem Gewindering (12) mit der Steckerbuchse (2) verbindbar ist.

7. Sensoreinheit (1) nach einem der vorigen Ansprüche, **dadurch gekennzeichnet, dass** das Sensorgehäuse (8) eine Oberseite (O), eine Unterseite (U), eine Rückseite (R), zwei Seitenwände (S1, S2) und eine Vorderseite (V) aufweist, wobei im Sensorgehäuse ein Anschluss (15) für eine Leiterplatte vorgesehen ist.

## Claims

1. Sensor unit (1) comprising a sensor housing (8), a socket (2), a printed circuit board (14) and a sensor (17), wherein the sensor housing (8) has a width (b), a length (1) and a height (h) and comprises a through-passage (7, 7.1, 7.2) and the socket (2) is narrower than the width (b), wherein the socket (2) has a diameter of at most 10 mm, has up to eight pole rods (19), has a thread (3) and has an orientation bead (9), and the socket (2) is connected to a printed circuit board (14) via a plurality of strands (13), and the sensor housing (8) has one or more viewing windows (5) for at least one externally visible status LED (16), wherein the status LED(s) (16) is connected to the printed circuit board (14), and the sensor housing (8) is made of plastic and is completely sealed, and the sensor (17) is completely enclosed by the sensor housing (8),
**characterized in that**
the sensor (17) is a Hall, TMR, AMR or GMR sensor, and the socket (2) comprises the orientation bead (9) in the inner circumference, wherein an optical marking (4) is present between the thread (3) and a front side (V) of the sensor housing (8), wherein the optical marking is an O-ring with different colours and serves to distinguish the different variants of the sensor unit.

2. Sensor unit (1) according to claim 1, **characterized in that** the sensor housing (8) comprises grooves (6, 6.1, 6.2, 6.3) and through-passages (7, 7.1, 7.2).

3. Sensor unit (1) according to one of the preceding claims,
**characterized in that** the status LED (16) is enclosed by one or more transparent cap(s).

4. Sensor unit (1) according to one of the preceding claims,
**characterized in that** the sensor (17) has a distance detector, suitable for detecting the distance of the sensor (17) from a magnetic strip.

5. Sensor unit (1) according to claim 4, **characterized in that** the distance detector is operatively connected to a status LED (16).

6. Sensor unit (1) according to one of the preceding claims,
**characterized in that** a cable (10) having a cable connector (11) and a threaded ring (12) can be connected to the socket (2) .

7. Sensor unit (1) according to one of the preceding claims,
**characterized in that** the sensor housing (8) has a top side (O), a bottom side (U), a rear side (R), two side walls (S1, S2) and a front side (V), wherein a connection (15) for a printed circuit board is provided in the sensor housing.

## Revendications

1. Unité de capteur (1) avec un boîtier de capteur (8), une prise femelle (2), une carte de circuit imprimé (14) et un capteur (17), dans laquelle le boîtier de capteur (8) présente une largeur (b), une longueur (I) et une hauteur (h) et comporte une sertissure (7, 7.1, 7.2) et la prise femelle (2) est plus étroite que la largeur (b), où la prise femelle (2) présente un diamètre de tout au plus 10 mm, présente jusqu'à huit barres polaires (19), présente un filet (3) et un bourrelet d'orientation (9), et la prise femelle (2) est connectée par l'intermédiaire d'une pluralité de torons (13) à une carte de circuit imprimé (14) et le boîtier de capteur (8) présente une ou plusieurs fenêtres de visualisation (5) pour au moins une DEL d'état (16) visible de l'extérieur, où la DEL d'état (16) est connectée à la carte de circuit imprimé (14) et le boîtier de capteur (8) est réalisé en matière plastique et entièrement scellé et le capteur (17) est entièrement entouré par le boîtier de capteur (8),
**caractérisée par le fait**
**qu'**il s'agit pour le capteur (17) d'un capteur de Hall, TMR, AMR ou GMR et que la prise femelle (2) comporte dans le pourtour intérieur le bourrelet d'orientation (9), où entre le filet (3) et une face avant (V) du boîtier de capteur (8) est prévue une signalisation optique (4), où la signalisation optique est un joint torique de couleurs différentes et sert à distinguer les différentes variantes de l'unité de capteur.

2. Unité de capteur (1) selon la revendication 1, **caractérisée par le fait que** le boîtier de capteur (8) comporte des rainures (6, 6.1, 6.2, 6.3) et des sertissures (7, 7.1, 7.2).

3. Unité de capteur (1) selon l'une des revendications précédentes, **caractérisée par le fait que** la DEL d'état (16) est recouverte par un ou plusieurs capuchons transparents.

4. Unité de capteur (1) selon l'une des revendications précédentes, **caractérisée par le fait que** le capteur (17) présente un détecteur de distance apte à détecter la distance du capteur (17) par rapport à une bande magnétique.

5. Unité de détection (1) selon la revendication 4, **caractérisée par le fait que** le détecteur de distance est en liaison active avec une DEL d'état (16).

6. Unité de capteur (1) selon l'une des revendications précédentes, **caractérisée par le fait qu'**un câble (10) peut être connecté à un connecteur de câble (11) et qu'une bague filetée (12) peut être connectée à la prise femelle (2).

7. Unité de capteur (1) selon l'une des revendications précédentes, **caractérisée par le fait que** le boîtier de capteur (8) présente une face supérieure (O), une face inférieure (U), une face arrière (R), deux parois latérales (S1, S2) et une face avant (V), où dans le boîtier de capteur est prévu un raccordement (15) pour une carte de circuit imprimé.
